# EUROPEAN PATENT SPECIFICATION

(11) **EP 1 733 625 B1**
(45) Date of publication and mention of the grant of the patent: **13.08.2008**
(21) Application number: 05012967.5
(22) Date of filing: 16.06.2005
(51) Int. Cl.: A23G 1/00

(54) **Process for producing granular chocolate base materials for chocolate production and products thereof**
Verfahren zur Herstellung von Schokoladegranulat Basismaterial für die Schokoladeherstellung
Procédé de fabrication de matériaux de base granulés pour la fabrication du chocolat

(43) Date of publication of application: 20.12.2006
(73) Proprietor: Kraft Foods R & D, Inc. Zweigniederlassung München, 81737 München (DE)
(72) Inventor: Kopp, Gabriele, 81545 München (DE); Shah, Manoj, Lindenhurst, IL 60046 (US)
(74) Representative: HOFFMANN EITLE

(56) References cited:
- EP-A- 1 110 615
- DE-A1- 10 253 810
- GB-A- 631 027
- GB-A- 930 981
- GB-A- 1 029 459
- GB-A- 1 048 726
- GB-A- 1 196 380
- US-A1- 2003 025 010
- US-A1- 2003 155 454
- DATABASE FSTA [Online] INTERNATIONAL FOOD INFORMATION SERVICE (IFIS), FRANkFURT-MAIN, DE; 1997, GÖRGENS E: "Turbulence comminution. Milling in micro vortex mills" XP2353251 Database accession no. 97-1-11-k0012 -& GÖRGENS E.: "Turbulent zerkleinert. Produktvermahlung in Mikro-Wirbel-Mühlen." SÜSSWAREN, vol. 41, no. 9, 1997, page 22, XP008055336 DORMAGEN, GERMANY
- PATENT ABSTRACTS OF JAPAN vol. 010, no. 287 (C-375), 30 September 1986 (1986-09-30) -& JP 61 104748 A (NISSHIN FLOUR MILLING CO LTD), 23 May 1986 (1986-05-23)

## Description

### FIELD OF THE INVENTION

The invention generally relates to processes for preparing granular/powdered chocolate base materials, and particularly chocolate base materials prepared with dry flowable chocolate ingredients, without forming or using cocoa liquor. The chocolate base materials can be used for preparing chocolate products.

### BACKGROUND OF THE INVENTION

Conventional chocolate manufacturing processes generally include blending of liquid ingredients, mainly cocoa liquor, cocoa butter, and optionally anhydrous milk fat, with dry ingredients, mainly sugar and milk powders; refining the resulting mass with one or more confectionery refiners to produce a smooth gritless texture; a conching process, which is an extended duration batch process of intense mixing, agitating and aerating at a specific temperature/time profile, and where other ingredients (e.g., cocoa butter, lecithin, and flavors) are typically added to create the chocolate mass; and then tempering, forming, and cooling the chocolate mass.

Cocoa liquor is a critical ingredient in the conventional preparation of chocolate products. The production of cocoa liquor is complex and generally involves cocoa bean cleaning, bean breaking, and winnowing to remove the outer hull or husk of the cocoa bean and to obtain the cocoa nibs. A roasting process and microbiological control process can be applied on the whole bean, the cocoa nib, or the final cocoa liquor. After roasting the beans and removing the husk or shell, the broken pieces of the beans, commonly referred to as the nibs, are crushed or ground to break the cells and form a smooth, creamy paste, known as chocolate liquor. The grinding process typically is a mechanical milling operation performed in various sequential milling steps from coarse grinding (e.g., pin mills, beater blade mills, disc mills) to fine grinding (e.g., disc mills and ball mills). Cocoa nibs have a typical cocoa butter content of about 50 to about 55 percent, which melts at approximately 30°C. Traditional milling of cocoa nibs results in a liquid (i.e., cocoa liquor) due to the liquefaction and release of cocoa butter during the heat generating milling process. The different mills are set-up in a sequence of at least one coarse milling and typically two fine milling steps to achieve the required particle size (generally about 20 to about 35 microns). Maintenance costs are relatively high as cocoa liquor is very abrasive. For example, iron milling balls and pins have to be continuously renewed in the most commonly used ball mills and pin mills, respectively. The cocoa liquor product typically is shipped and stored in heated vessels to maintain it above its melting temperature of approximately 30°C, which also adds to cost. Some or all of the liquor can be kept and used as is, or portions thereof can be fed into presses in which cocoa butter is squeezed out to leave a press cake or cocoa cake that is ground into cocoa powder. These various steps result in conventional basic ingredients for chocolate and chocolate flavoring: chocolate liquor, cocoa butter, and cocoa powder.

It would be highly desirable to prepare shelf-stable, food grade, and functional chocolate ingredients suitable for the manufacture of chocolate products without requiring the use of, or intermediate production of, cocoa liquor. The invention addresses this and other needs in an efficient and economically feasible manner.

XP 2353251 (Database FSTA, International Food Information Service (IFIS), Frankfurt/Main, DE 1997, Görgens E.: « Turbulence comminution. Milling in micro vortex mills », vol. 41, No. 9, 1997, page 22) relates to the comminution of products, e.g. temperature-sensitive products such as partially defatted cacao beans, in a micro-vortex mill. Micro-vortexes are generated by rotation of a grinding plate relative to a grinding path of a stator. In this mill, a fan plate of a rotor accelerates air to the circumferential velocity of said fan plate. By using a profiled grinding plate and by a specific design of the grinding plate, the air inside single grinding chambers is made turbulent. The product to be milled is metered into the grinding zone of the micro-vortex mill and after grinding passes to a cyclone.

GB 631 027 describes a method and an apparatus for making chocolate confectionery, wherein dry materials of chocolate composition, including cacao nibs, are processed in a pulverizer unit. The pulverized product, the bulk of which passes through a 325 mesh screen, is then blown upwardly and laterally into a discharge duct. The bulk of the pulverizer material passes then downwardly from a cyclone separator into another discharge duct. As a pulverizer, different types are proposed such as centrifugal, air floatation and hammer-type grinders. The temperature in the pulverizer is maintained below a temperature which would result in substantial liquefication of the cacao butter in the nibs. Controlled conditions of temperature and moisture are provided so as to avoid clogging in the pulverizer.

GB 930 981 describes a method of processing cacao mixes, wherein the cooled and dried cacao mix passes into a grinder. The granular components of the mix are for example sugar and powdered milk. The grinder may be a jet pulverizer or an impact pulverizer which permits grinding of the cacao mix in an inert atmosphere. The temperature of the material should not exceed room temperature, and the ground material has a mean particle size below 40 microns.

GB 1 029 459 relates to a method of and an apparatus for making chocolate composition. Different dry components, such as crushed cacao kernel, sugar and optionally milk powder, are brought together. Then, the components are ground by means of impact crushing, plasticized while cocoa butter is added, mixed and finally ground.

Further confectionery compositions with finely ground materials are described in JP-61-104748 A and GB 1 196 380.

### SUMMARY OF THE INVENTION

This invention, which is defined in claims 1 and 33 below, provides a process for preparing chocolate base compositions suitable for chocolate production without the formation, or the need to use, cocoa liquor, and the products of such processes. The chocolate base may also be used in other food applications if desired.

In one embodiment, the invention relates to a process for preparing chocolate base compositions prepared with dry, freely-flowable, particulate ingredients including whole cocoa beans and/or cocoa nibs and optionally at least one different edible ingredient in a vortex or cyclonic mixing or grinding apparatus to form a dry, freely-flowable, particulate chocolate base composition without forming or generating cocoa liquor. Preferably, such at least one different edible ingredient is included with the whole cocoa beans and/or cocoa nibs. For purposes of this invention, a vortex or cyclonic grinding apparatus is an apparatus for grinding solids to smaller particle sizes without using moving mechanical parts in the actual grinding process and wherein a vortex or cyclonic stream of gas is used to effect the actual grinding process. Important features of the present invention are that (1) the resulting chocolate base composition have reduced particle size (generally less than about 300 microns, preferably less than 100 microns, and more preferably less than about 50 microns) and is a dry, freely-flowable, particulate composition and (2) essentially no cocoa liquor is formed or generated in the grinding process. For purposes of this invention, particle sizes are reported as D90 values (i.e., 90 percent of the particles are less than the specified particle size). Indeed, if significant amounts of cocoa liquor or other liquid forms are generated during the grinding process, such liquids will "gum up" the process and generally form unusable compositions (at least unusable for making chocolate products).
For purpose of this invention, "essentially no cocoa liquor" is less than an amount which would cause problems (i.e., "gum up" the vortex grinding process). For purposes of this invention, "gumming up" the vortex grinding process would effectively destroy the dry, flowable nature of the chocolate base material or composition resulting from the vortex grinding process (e.g., particles would clump together, adhere to the internal surfaces of the grinder, or the like). Thus, conditions within the vortex grinding system are to be controlled such that such liquids are not formed in amounts sufficient to adversely effect the vortex grinding system; maintaining such non-liquid forming conditions are within the skill of the art in light of the guidance provided herein. Although not wishing to be limited by theory, it is believed that if any liquids, including cocoa liquor, are formed during vortex grinding, the amounts and rate of production are small enough that the liquids are absorbed by the non-cocoa nib ingredients (if present), especially the sweetener, so that the particles effectively remain dry and free flowing; grinding cocoa nibs alone, however, does not appear to form sufficient liquids to adversely effect the grinding process or ground product. Throughout this specification the terms "vortex mixing," "vortex grinding," "cyclonic mixing," and "cyclonic grinding" are used interchangeably.

In such a vortex mixing or grinding system, compressed gas (preferably air) is introduced into an enclosure that includes a truncated conical shaped section in which it travels along a downward path through the enclosure including the conical section to a lower end thereof. The gas reaching the lower end flows back up and exits the enclosure via an exhaust outlet, thereby generating a vortex within the enclosure. A mixture comprising whole cocoa beans and/or cocoa nibs and optionally different edible ingredient, as flowable dry ingredients, is introduced the enclosure and is entrained in the introduced gas traveling downward through the enclosure, wherein at least a portion of the mixture is ground before reaching the lower end of the enclosure providing a granular chocolate base product that can be discharged from the lower end of the enclosure. The additional dry granular ingredient(s) which is (are) optionally co-processed with the whole cocoa beans and/or cocoa nibs in the process unit in this manner are not particularly limited, and may include one or more of dairy solids, sweeteners, cocoa powders, flavorings, emulsifiers, and so forth. Preferably at least one optional dry granular ingredient is included with the whole cocoa beans and/or cocoa nibs. Generally, sweeteners (e.g., sucrose) are included with the whole cocoa beans and/or cocoa nibs. If milk chocolate is desired, dairy solids (e.g., milk powder, whey powder, and the like) are included with the cocoa nibs and sweeteners. It is generally preferred that these dry ingredients are combined with the whole cocoa beans and/or cocoa nibs prior to the vortex grinding system. If care is taken to insure rapid and effective mixing, the dry ingredients can be combined within the vortex grinding system; mixing should be sufficient to insure that cocoa liquor or other liquids are not formed locally within the vortex grinding system in sufficient amounts to "gum up" the process.

The resulting chocolate base product is a shelf-stable edible product, which can be used as intermediary preblended ingredient suitable for preparing chocolate or other food products. The chocolate base product has sensory and functional attributes suitable for production of high quality chocolate products, and in particular, for production of high quality chocolate products without use of cocoa liquor in the production process.

In another embodiment, a process is provided for manufacturing chocolate with the chocolate base as an intermediate preblended ingredient. Such a method involves conching a composition comprising the chocolate base product and cocoa butter to provide a chocolate material, and tempering, forming and cooling the chocolate material to form a chocolate product. No cocoa liquor is required or needed as an ingredient, or is produced *in situ,* during the chocolate base or final chocolate product preparations. As noted above, "production" of cocoa liquor or "no cocoa liquor" is intended to mean amounts of cocoa liquor which would "gum up" the vortex grinding system.

Forming the chocolate base compositions or preblends in accordance with embodiments of this invention offers numerous advantages and improvements over conventional processes for preparing chocolate. Processes in accordance with embodiments of this invention make it possible to reduce and even completely eliminate cocoa liquor processing from chocolate manufacturing. This eliminates the need for costly milling and handling of cocoa liquor (e.g., shipping and storing in heated vessels). Also, the increased maintenance costs associated with use of cocoa liquor, largely due its abrasive effects on mechanical milling equipment associated with the production of the cocoa liquor, are avoided. Indeed, the present vortex grinding system allows the use of whole cocoa beans in preparing the chocolate base composition. Whole cocoa beans cannot normally be used in the production of cocoa liquor largely due to the abrasive effects of the hulls on conventional mechanical grinding equipment. Generally, cocoa nibs include up to about 2 percent hulls; even this low level of hull causes significant abrasive effects when such nibs are ground using conventional grinding equipment.
During chocolate base production in accordance with embodiments herein, the interaction of the dry ingredients and the vortex gas- or air-flow generated in the enclosure effectively grinds the whole cocoa beans and/or cocoa nibs and dry ingredients that may be included at a controlled temperature to avoid releasing cocoa butter or other liquids from the beans and/or nibs. The resulting flowable powder product is stable and can be conveniently transported at ambient conditions. Significant particle size reduction of the cocoa and dry ingredients may be achieved in the vortex-generating apparatus sufficient to reduce or even eliminate the need for confectionery refining steps, thereby reducing or eliminating the significant costs otherwise associated with the maintenance and repair of confectionery refiners. In addition, meaningful and significant particle size reduction is effected upon the dry mix comprising cocoa nibs and other particulate chocolate ingredients in forming the chocolate base in the cyclonic system without the need to contact the cocoa materials (i.e, cocoa beans, cocoa nibs, and the like) or other dry chocolate ingredients with any moving mechanical parts, reducing equipment maintenance and cleaning requirements.

The vortex grinding treatment also makes it possible to produce a dry, flowable, granular chocolate base in a relatively low-temperature, short-duration procedure in which the chocolate base is prepared in a single-stage operation without impairing the desirable functional and sensory attributes of the chocolate base product. This process executes the treatment in a manner that substantially preserves desirable functional and sensory aspects of dry chocolate ingredients in the chocolate base compositions, which are useful for chocolate or other food manufacture.

### BRIEF DESCRIPTION OF THE DRAWINGS

Other features and advantages of the invention will become apparent from the following detailed description of preferred embodiments of the invention with reference to the drawings, in which:

Figure 1 is a flow chart of a general method for chocolate production including the preparation of a chocolate base intermediate product according to an embodiment of this invention;

Figure 2 is a flow chart of a preferred method for chocolate production including the preparation of a chocolate base intermediate product according to an embodiment of this invention

Figure 3 is a schematic view of a vortex or cyclone grinding system useful for producing chocolate base intermediate product according to an embodiment of this invention;

Figure 4 is a cross sectional view of the cyclone unit used in the processing system illustrated in Figure 3; and

Figure 5 is a schematic view of a system useful for producing chocolate base intermediate product according to another embodiment of this invention.

The features depicted in the figures are not necessarily drawn to scale. Similarly numbered elements in different figures represent similar components unless indicated otherwise.

### DETAILED DESCRIPTION

Preferred embodiments of the invention will be described below with specific reference to chocolate manufacture incorporating a unique process for preparing a granular chocolate base suitable for the manufacture of savory chocolate products without using, needing, or forming a cocoa liquor ingredient.

For purposes herein, the term "cocoa material" refers to materials derived from cocoa beans used in the manufacture of chocolate; generally such cocoa materials include whole cocoa beans, cocoa nibs, and/or mixtures thereof. For purposes herein, the term "whole cocoa bean" refers to roasted and/or unroasted, fermented and/or unfermented, whole and/or broken pieces of cocoa beans (including the cocoa nibs and hulls); the term "cocoa nibs" generally refers to roasted and/or unroasted, fermented and/or unfermented, whole and/or broken pieces of dehulled cocoa beans; as noted earlier, cocoa nibs may contain small amounts (generally less than about 2 percent) of hulls. "Cocoa liquor" or "chocolate liquor" generally refers to product obtained from crushing or grinding cocoa nibs into a smooth, creamy paste-like liquid substance; the liquor optionally may be prepared in the presence of other chocolate ingredients. "Cocoa butter" generally refers to a lipid component isolated from cocoa liquor, typically by pressure application, leaving "press cake" or "cocoa cake" which can be ground and sifted to provide "cocoa powder." The term "chocolate base" generally refers to any lesser included combination of ingredients of a full chocolate formulation. "Granular" or "particulate" refer to a free-flowing mass of small discrete solid particles (generally less than about 300 microns). "Dry" or "low-moisture", as used interchangeably herein in the context of granular or particulate materials, means the material contains less than about 14 percent total moisture. For purposes herein, "grinding" a particle means crushing, pulverizing, abrading, wearing, or rubbing the particle to break it down into smaller particles and/or liberate smaller particles, and includes mechanisms involving contact between moving particles, and/or between a moving particle and a static surface; and "drying" means dehydrating (i.e., reducing moisture content).

In the present invention, a new chocolate manufacturing process is described using cocoa materials such as cocoa beans and/or cocoa nibs (preferably cocoa nibs and more preferably, roasted cocoa nibs) as a direct raw material without mechanical milling or otherwise treating the cocoa nibs to form cocoa liquor. In an incipient process step, cocoa nibs are ground together with optional dry freely-flowable particulate ingredients, such as dairy solids, sweeteners, and the like, in a gas vortex grinding system which grinds and mixes them without relying on moving mechanical parts to effect grinding, resulting in a flowable powder product useful as a chocolate base, without the formation of cocoa liquor.

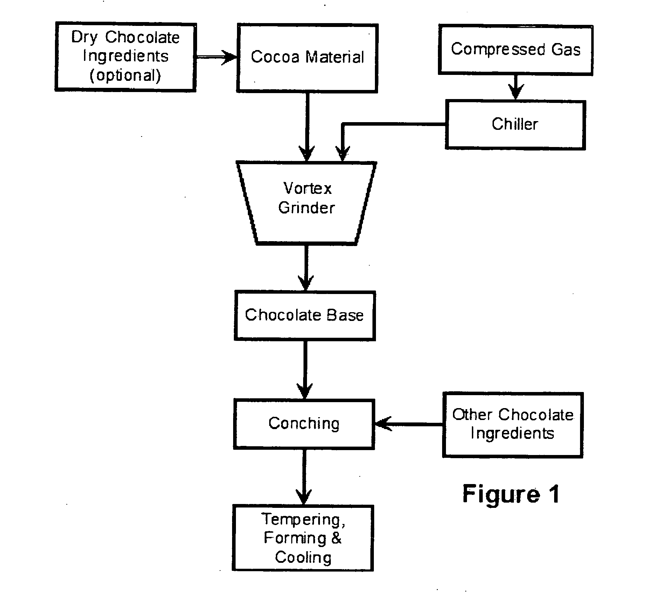

Figure 1 generally illustrates the general process of the present invention. Cocoa materials, with or without one or more optional dry, freely-flowable particulate chocolate ingredient, are used to form a "dry mix" which is then subjected to a vortex grinding treatment using compressed gas (preferably compressed air) in a vortex grinding unit at a temperature below about 30°C to provide a granular chocolate base without intermediately or otherwise forming cocoa liquor. If needed or desired, the compressed air may be chilled using a conventional chilling unit. The chocolate base is then conched with additional chocolate ingredients. Generally, such additional ingredients include sweeteners, milk powders, cocoa butter, cocoa powder, emulsifiers, flavors, and the like; some of these additional ingredients (e.g., sweeteners and milk powders) may have been included in the dry mix and would not, therefore, need to be added during conching. If desired, cocoa liquor could also be added during conching; of course, such cocoa liquor is not required. Such ingredients are normally added during conching in the conventional chocolate manufacturing process; the methods of adding such ingredients and the amounts of such ingredients in the present invention are essentially the same as in the conventional chocolate manufacturing process. Likewise, the methods used for tempering, forming, and cooling the final chocolate products in the present invention are essentially similar and/or the same as the tempering, forming, and cooling steps in conventional chocolate manufacturing.

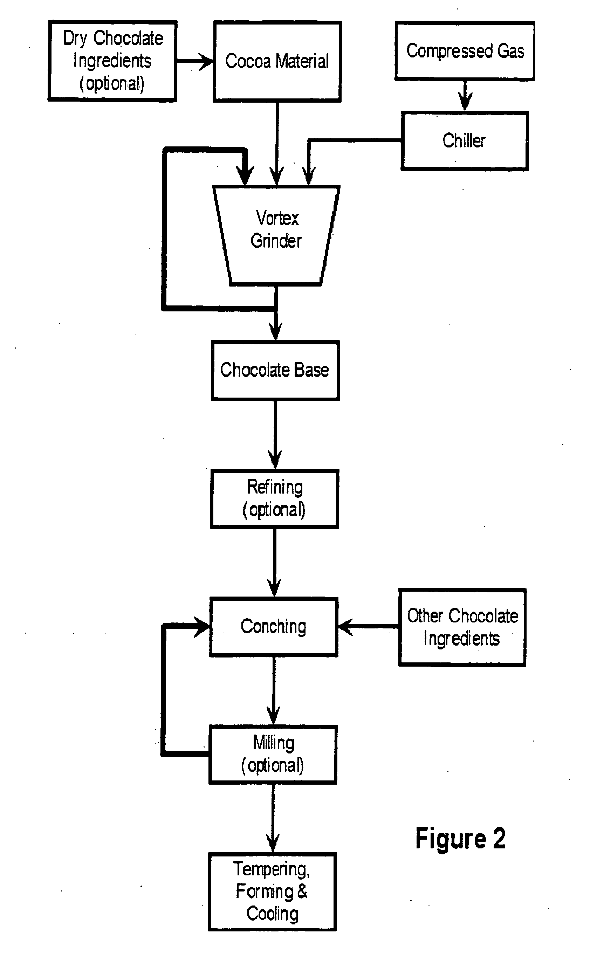

Figure 2 illustrates a preferred embodiment, wherein cocoa materials (generally whole cocoa beans or cocoa nibs, and preferably cocoa nibs) and optionally one or more dry, freely-flowable particulate chocolate ingredient (generally a sweetener) are thoroughly mixed or otherwise combined to provide a "dry mix." If a dark chocolate is desired, the cocoa material is ground with dry, freely-flowable particulate chocolate ingredient comprising a sweetener (generally sucrose), cocoa powder, or mixtures thereof; if a milk chocolate is desired, dairy solids may be included. Generally, cocoa nibs have a fat content of about 50 to about 55 percent. For making dark or milk chocolate, the total amount of the other chocolate ingredients (if used) to be mixed with the cocoa nibs preferably should be sufficient to reduce the fat content to less than about 35 percent and more preferably to about 10 to 25 percent; higher or lower fat contents can be used if desired. Generally for dark chocolate, this dry mix contains about 15 to about 85 percent cocoa nibs and about 15 to about 85 percent sucrose and preferably about 35 to about 70 percent cocoa nibs and about 30 to about 65 percent sucrose. Generally for milk chocolate, this dry mix contains about 5 to about 30 percent cocoa nibs, about 30 to about 75 percent sucrose, and about 10 to about 40 percent dairy solids and preferably about 15 to about 25 percent cocoa nibs, about 50 to about 70 percent sucrose, and about 15 to about 30 percent dairy solids. Generally, the cocoa beans or cocoa nibs in the dry mix are generally less than about 30,000 microns in their longest dimension (i.e., whole or broken beans or nibs); the sweetener generally has a particle size of less than about 2500 microns; and the dairy solids (if used) generally have a particle size of less than about 800 microns. However, smaller or larger particle sizes for these ingredients can be used if desired so long as the desired particle size reduction can be obtained.

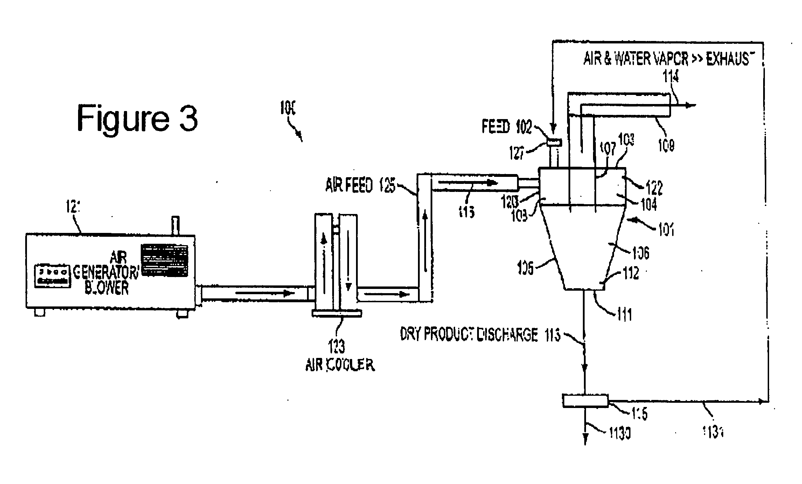

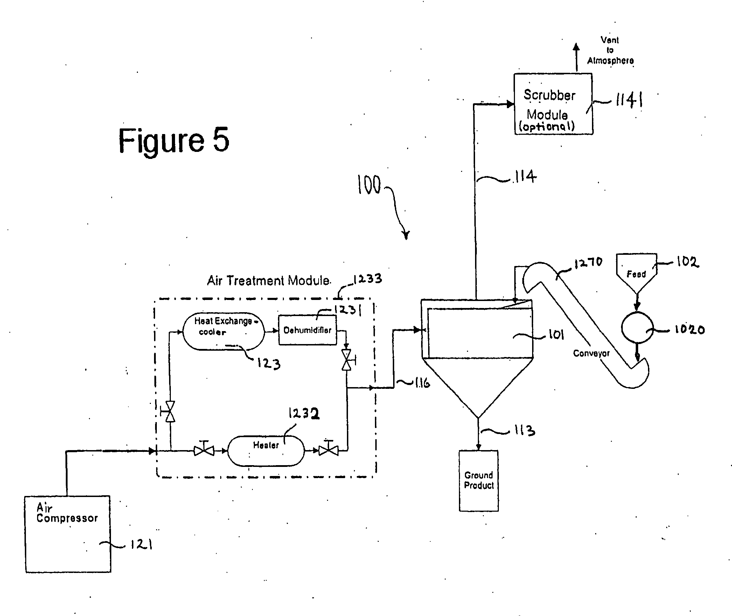

The dry mix is subjected to a vortex grinding treatment using compressed gas (preferably compressed air) in a vortex grinding unit to provide a granular chocolate base without intermediately or otherwise forming cocoa liquor. As noted above, the lipids in cocoa nibs generally melt at about 30°C (86°F); to avoid melting during the vortex grinding procedure, the interior of the vortex grinding system is generally kept below this temperature, preferably below about 25°C, and more preferably below about 20°C. Passing the compressed gas through a chiller or other refrigeration means, as shown in Figures 3 and 5, can be used to control the interior temperature to the desired level. Additionally, the temperature of the cocoa nibs and other chocolate ingredients may, if desired, be controlled (not shown in Figures 1 and 2) to keep the temperature within the desired range within the vortex grinding system. Generally, however, control of the compressed gas temperature should be sufficient to keep the temperature in the desired range.

The resulting granular chocolate base product desirably has a particle size of about 10 to about 300 microns, preferably about 20 to about 200 microns, and more preferably about 20 to 35 microns and is a dry, freely-flowable, particulate chocolate composition prepared without forming or generating cocoa liquor. The granular chocolate base product (or a portion thereof) may, if desired, be returned to the vortex grinding system, as shown in Figure 2, for one or more additional passes through the vortex grinder to further reduce the particle size. A size separation system, as further described below, can be used to pass particles of the desired range to the remainder of the process shown in Figures 1 and 2 and to pass particles above the desired range (e.g., above about 300 microns) to an additional pass through the vortex grinder to further reduce their particle size. The chocolate base composition is then made available for optional refining, conching, optional milling, and ultimately tempering, forming, and cooling to form the desired chocolate product. The optional refining and optional milling processes, which are shown in Figure 2, can be used to fine tune or adjust the particle size of the chocolate particles, if needed; such optional steps would use conventional refining (i.e., 2- or 5-roll refiners) and milling equipment. Indeed, if necessary or desirable, the product from the optional milling step can be recirculated back to the conching step (shown in Figure 2) to provide a final adjustment of the particle size. Generally, the desired particle size of the chocolate composition prior to the tempering, forming, and cooling steps is about 20 to about 50 microns, and preferably about 20 to 35 microns. Various combinations of vortex grinding, optional refining, and optional milling can be used to achieve these desired particle sizes.

During conching, additional chocolate ingredients are added. Generally, such additional ingredients include cocoa butter, anhydrous milk fat, cocoa powder, emulsifiers, flavors, and the like. If desired, cocoa liquor could also be added during conching; of course, such cocoa liquor is not required. Such ingredients are normally added during conching in the conventional chocolate manufacturing process; the methods of adding such ingredients and the amounts of such ingredients in the present invention are essentially the same as in the conventional chocolate manufacturing process. Likewise, the methods used for tempering, forming, and cooling the final chocolate products in the present invention are essentially similar and/or the same as the tempering, forming, and cooling steps in conventional chocolate manufacturing.

If desired, white chocolate, which is generally made without using cocoa nibs or cocoa liquor, can be prepared using the techniques of this invention. In such a case, the chocolate base composition can be prepared by grinding a mixture of a sweetener and dairy solids using the vortex grinding system. The resulting white chocolate base material can then be used to prepare a white chocolate using conventional methods. Preparing white chocolate base material in the vortex grinding system would allow essentially all types of chocolate products to be prepared using similar equipment and would, therefore, avoid costly and separate productions lines for different chocolate products.

Referring now to Figures 3-5, details of an exemplary equipment arrangement and process of operating it for conducting the grinding of the mixture of cocoa nibs and other dry chocolate ingredients, as indicated in Figure 1, is discussed hereinafter.

Referring to Figure 3, an exemplary system **100** for performing grinding of dry mix or feed mixture **102** comprising cocoa nibs and other dry, freely-flowable particulate chocolate ingredients according to a process embodiment of this invention is shown. Cyclone **101** is a structural enclosure comprised of two fluidly communicating sections: an upper cylindrical enclosure **103** defining a chamber **104** and a lower truncated conical shaped enclosure **105** that defines a cavity **106.** Both the upper and lower enclosures are annular structures in which a solid wall or shell encloses an interior space. In this illustration, the upper enclosure **103** has a generally uniform cross-sectional diameter, while the lower enclosure **105** tapers inward towards its lower end **112.** In a non-limiting embodiment, the taper angle **a** of lower enclosure **105** may range from about 66 to about 70 degrees. For purposes herein, the terminology "enclosure" means a structure that encloses a chamber, cavity, or space from more than one side.

Compressed air **116** and dry mix **102** are separately introduced into the cyclone **101** at the upper enclosure **103.** The processed mixture is discharged as a solid particulate **113** from the lower end **112** of the cyclone **101** having a reduced particle size as compared to the dry mix fed into the processing unit. The solid particulate **113** is a chocolate base in this illustration. An optional valve mechanism **111,** such as a rotary valve or rotary air-lock, is shown that permits extraction of dried, ground material from the cyclone without interrupting continuous operation of the system and which minimizes leakage of the introduced air from the cyclone **101.** Alternatively, a hollow cylindrical extension shaft (not shown), may be installed on the lower end **112** of the cyclone **101** to help direct granulated product into a receptacle or the like situated below the cyclone. In the absence of a valve mechanism at the lower end **112** of the cyclone **101,** the pressurized air introduced into the cyclone may escape from the cyclone **101** via opening **111** at the cyclone's lower end **112.** If desired, this additional air loss can be compensated for in the inlet air feed rate to sustain a desired air pressure condition inside the cyclone, such as by increasing it sufficiently to offset air loss occurring from both the bottom of the cyclone as well as the exhaust gas stream **114.**

Air, and possibly some small amount of moisture vapor released from the feed mixture during treatment within the cyclone **101,** is exhausted as exhaust gases **114** from the cyclone via sleeve **107** and exhaust duct **109.** Some nominal amount of light debris may be liberated from the feed during processing in the cyclone, and may be eliminated with the exhaust gas stream **114.** The exhaust gas stream **114** optionally may be particle filtered, and/or scrubbed to strip out volatile compounds or other compounds, such as using a separate scrubber module (e.g., packed bed type scrubber) before it is vented to the atmosphere (e.g., see Figure 5, feature **1141).** Sieving device **115** is described in more detail later herein.

To introduce the compressed air **116** into cyclone **101,** an air pressurizing mechanism **121,** such as a blower or air compressor, generates a high volume, high velocity compressed air stream that is conducted via air ducting **125** through a cooling unit **123,** and from there is introduced into upper enclosure **103** of cyclone **101.** The terms "compressed gas" or "compressed air" refer to gas or air compressed to a pressure above atmospheric pressure (e.g., above 760 mm Hg absolute (14.7 Ib./inch² absolute)). Heating the compressed air before its introduction into the cyclone **101** ordinarily is not desirable or necessary for embodiments herein, although in certain situations, such as described hereinafter, it may be useful. Heating the compressed air generally is undesired as it may induce melting of any heat-sensitive portion of the cocoa nibs or other chocolate ingredient being processed in the cyclone. In one embodiment, where ambient air temperature is about 30°C (86°F) or higher, the compressed air is cooled to a temperature below the glass-transition temperature of the cocoa butter portion of the cocoa nibs before the air is introduced into cyclone **101.** In one particular embodiment, the air is cooled to a temperature of about 2 to about 25°C (about 35 to about 75°F), particularly about 4 to about 20°C (about 40 to about 70°F), and more particularly about 16 to about 20°C (about 60 to about 70°F).

In another embodiment, air may be introduced into the cyclone at ambient temperatures without being heated to the extent the air temperature is below the melting temperature of the lipid portion of the cocoa nibs or other chocolate ingredients to be processed in cyclone **101.** That is, if the air temperature of the air as discharged from the compressor **121** is below the melting temperature of the lipid components of the cocoa nibs, and so forth, being processed, it generally is not necessary, although not exduded either, to conduct the air through air cooler **123** in an operating mode before the air is fed into the cyclone **101.** The ambient air temperature and any air temperature changes associated with compression preferably is monitored before running air without use of the air cooler. The air cooler **123** may be a heat exchanger device. The air cooler **123** may be a commercial or industrial heat exchanger unit, or a refrigeration unit or other suitable cooling device capable of reducing the temperature of continuous flow process air to within about 10°F (about 6°C) of the coolant temperature.

The compressed air **116** is introduced into chamber **104** of cyclone **101** substantially tangentially to an inner wall **108** of the upper enclosure **103.** This can be done, for example, by directing the air stream **116** to a plurality of holes **120** (e.g., 2 to 8 holes) circumferentially spaced around and provided through the wall **108** of the upper enclosure **103** through which the air stream is introduced. Deflection plates **122** can be mounted on inner wall **108** of upper enclosure **103** for deflecting the incoming stream of air into a direction substantially tangential to the inner wall **108** according to an arrangement that has been described, for example, in U.S. Patent Application Publication 2002/0027173, which descriptions are incorporated herein by reference. The compressed air may be introduced into the upper enclosure **103** of cyclone **101** in a counter-clockwise or a clockwise direction.

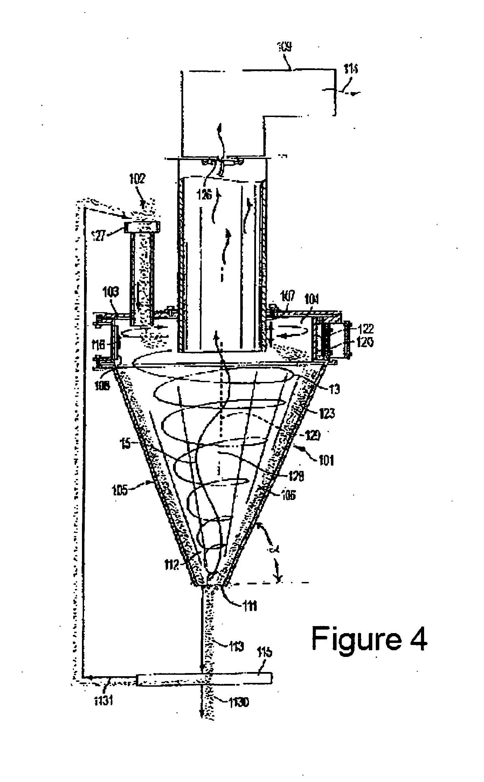

The introduced air **10** generally may be further pressurized cyclonically in the chamber **104** and cavity **106.** Due to the centrifugal forces present in the cyclonic environment, it is thought that the pressure nearer the outer extremities of the cavity **106** is substantially greater than atmospheric pressure, while the pressure nearer the central axis of the cavity **106** is less than atmospheric pressure. As shown in Figure 4, as a non-limiting illustration, after being introduced into upper enclosure **103,** the compressed air **116** spirals or otherwise travels generally along a large downward path as a vortex **13** through the upper enclosure **103** and the lower conical shaped enclosure **105** until it reaches a lower end **112** thereof. In this illustration, near the lower end **112** of the cavity **106** defined by the inner walls **123** of lower enclosure **105,** the downward direction of the air movement is reversed, and the air (and any moisture vapor released from the dry mix during treatment within the cyclone **101)** whirls back upwardly as a smaller vortex **15** generally inside the larger vortex **13.** The smaller vortex **15** flows back up from the lower end **112** of the lower enclosure **105** in a central region **128** located proximately near the central axis **129** of the cyclone **101** and generally inside the larger vortex **13.** The smaller vortex **15** flows upward until exiting the enclosure via sleeve **107** and then exhaust duct **109.**

A vortex breaking means (not shown) optionally can be interposed below or inside the lower end **112** to encourage the transition of the larger vortex **13** to the smaller vortex **15.** Various vortex breaking arrangements for cyclones are known, such as the introduction of a box-shaped enclosure at the bottom of the conical enclosure.

The dry mix **102** is separately introduced into upper enclosure **103.** The introduced dry mix **102** drops gravitationally downward into chamber **104** until they become entrained in the air vortex **13** within cyclone **101.** Preferably, the dry mix **102** is introduced into upper enclosure **103** in an orientation such that they will fall into the cyclonic vortex **13** generated within cyclone **101,** where located in the space between the sleeve **107,** and inner wall **108** of the upper enclosure **103.** This feed technique serves to minimize the amount of dry mix **102** that may initially fall into extreme inner or outer radial portions of the vortex where the cyclonic forces that the dry mix experiences may be lower. As indicated, the dry mix material **102** may be prechilled before it is introduced into the cyclone **101** by pre-storing or conveying the dry mix in or through any suitable chilling device **1020** suitable for that purpose (e.g., commercial or industrial heat exchanger or refrigeration unit). The entrained dry mix travels in the vortex **13** of air spiraling or otherwise traveling downward through the lower enclosure **105** until reaching the lower end **112** of the lower enclosure **105.** During this downward flow path, the grinding effects on the dry mix material may occur at different times and at different places during the downward flow path of the dry mix material through the cyclone.

While not desiring to be bound to any theory, it is thought that pressure-gradient and coriolis forces, cavitation explosions, and the collision interaction between the dry mix particles entrained in the high-velocity cyclonically pressurized air may be violently disruptive to the physical structure of that dry mix material. Alternatively, or in addition thereto, the centrifugal force of the vortex may move the dry mix material forcefully against inner walls **108** and **123** of the enclosure. These modes of attrition, individually or in combination, or other modes of attrition that may occur within the cyclone (which may not be fully understood) bring about comminuting (grinding) of the dry mix concurrent with drying. As a result, during this movement of the dry mix material from the upper enclosure **103** down to the lower end **112** of the lower enclosure **105,** the dry mix material is physically processed in beneficial ways. The unit **101** requires no mechanical moving parts for effecting grinding of the dry mix components.

In a further embodiment of the invention, the discharged solid particulate product **113** can be screened, such as using a sieve, such as a screen sieve or other suitable particulate separation/classifying mechanism **115,** to sort and separate the finer fraction of ground dry mix **1130** in the solid particulate product **113** that have particle sizes meeting a size criterion, such as being less than a predetermined size, which are suitable for post-grinding processing, from the coarser product fraction **1131.** The coarser (oversize) product fraction **1131** optionally can be redirected into the upper enclosure of the cyclone for additional processing therein. A conveyor (not shown) could be used to mechanically transport the redirected coarser material back to feed introducing means **127** or other introduction means in upper enclosure **103** of cyclone **101.** Also, feed introducing means **127** may be an inclined conveyor, screw feeder, and the like (e.g., see Figure 5, feature **1270),** which transports dry mix feed material **102** into chamber **104** of the cyclone **101** at the upper enclosure **103.**

It will be appreciated that sleeve **107** can be controllably moved up and down to different vertical positions within cyclone **101.** In general, the lower sleeve **107** is spaced relative to the cavity **106,** the smaller the combined total volume of the cyclone **101** which is available for air circulation. Since the volume of air being introduced remains constant, this reduction in volume causes a faster flow of air, causing greater cyclonic effect throughout cavity **106** and consequently causing the dry mix to be ground to circulate longer in the chamber **104** and the cavity **106.** Raising the sleeve **107** generally has the opposite effect. For a given feed and operating conditions, the vertical position of sleeve **107** can be adjusted to improve process efficiency and yield.

Also, a damper **126** can be provided on exhaust duct **109** to control the volume of air permitted to escape from the central, low-pressure region of cavity **106** into the ambient atmosphere, which can affect the cyclonic velocities and force gradients within cyclone **101.** Other than the optional damper, the unit **101** generally requires no moving parts for operation, and particularly with respect to effecting the grinding action which occurs within the unit.

By continually feeding a dry mixture **102** of cocoa nibs and other chocolate ingredients into cyclone **101,** a continuous throughput of ground chocolate base product material **113** is obtained. A non-limiting example of a commercial apparatus that can be operated in a continuous manner according to processes of this invention is a WINDHEXE apparatus, manufactured by Vortex Dehydration Systems, LLC, Hanover Maryland. Descriptions of that type of apparatus are set forth in U.S. Patent Application Publication 2002/0027173, which descriptions are incorporated in their entirety herein by reference.

The cyclonic system **100** provides mechanical energy, without moving mechanical parts, to further disintegrate and granulate the introduced mixture of cocoa nibs and other chocolate ingredients. The chocolate base material **113 (1130)** exiting the cyclone **101** exhibits a flowable solid particulate type form, which may be a powdery material. In addition, meaningful and significant particle size reduction is effected upon the dry mix **102** in forming the chocolate base in cyclone **101** of system **100** without the need to contact cocoa nibs and other dry chocolate ingredients with any moving mechanical parts for that purpose, which reduces equipment needs, maintenance and cleaning requirements.

The processing unit **101** may be left relatively clean and tidy, as the dry mix materials do not tend to cling as residue to the interior walls of the process unit used to grind the dry mix material into granular form. This can facilitate any desired change-over for processing a different type of feed material within the same unit. In one process scheme for processing mixtures of cocoa nibs and other chocolate ingredients, the introduction of the compressed air into the cyclone **101** comprises supplying compressed air at a pressure within the range of from about 10 to about 100 psig, particularly from about 40 to about 60 psig, and more particularly from about 45 to about 55 psig.

The volumetric introduction rate of the compressed air into the cyclone is within the range of from about 500 to about 10,000 cubic feet per minute (CFM), particularly from about 750 to about 2,000 CFM, and more particularly from about 800 to about 1,200 CFM.

The feed rate of the low-moisture, mixture of cocoa nibs and other chocolate ingredients can vary, but generally may be in the range of about 1 to about 300 pounds per minute, particularly about 50 to about 150 lbs./min, for about a 1 to about 10 foot diameter (maximum) cyclone. The cyclone diameter may be, for example, from about 1 to about 10 feet in diameter, particularly about 1 to about 6 feet in diameter.

The chocolate mix ingredients may be processed within the above-noted cyclone arrangement within a very short period of time. In one embodiment, upon introducing the ingredients into the cyclone, a granulated product thereof is discharged from the processing unit within about 15 seconds, and particularly within about 1 to about 5 seconds. Temperatures within the cyclonic grinder should be below about 30°C and preferable below about 20°C. Volatile components also may be handled by conducting the cyclone exhaust through a scrubber unit and the like after it exits the cyclone unit.

Substantially all the introduced feed material ("dry mix") may be discharged as processed product within such a short period of time. The above-noted processing temperatures and durations applied during grinding of the feed generally are low enough to help prevent any significant undesired changes in the cocoa butter and/or starch structure or starch content of cocoa and other ingredients, or other physico-chemical attributes, from occurring during the grinding treatment such as described herein. Any cocoa butter and starch content present in the cocoa (before granulation) is preserved substantially intact through the grinding treatment performed in accordance with this invention. Conventional milling generally employs moving parts to effect attrition of a material, which tends to generate localized heat. Intense or unduly elevated heat may increase the risk of degradation of desirable chocolate functional features.

In one embodiment, the dry mixture of cocoa nibs and other chocolate ingredients used as the feed material of the grinding process generally contains about 10 percent or more, and particularly about 15 to about 60 percent lipid content, and less than 14 percent moisture, and generally from about 1 to about 14 percent moisture, particularly about 1 to about 4 percent, when introduced into the cyclone **101** of system **100.** The circular vortex air-flow grinds the nibs and other dry ingredients at a controlled temperature to avoid releasing cocoa butter from the nibs. The compressed air fed into the cyclone normally ordinarily is unheated, or at least is not heated to a temperature that closely approximates or exceeds a melting temperature of a lipid component of the dry mix being processed. In one embodiment, the dry mix is processed at a cooled or at least at a nonheated temperature, such as at a temperature of about 65 to about 75°F (about 18 to about 25°C), or lower temperatures. The ground (granulated) chocolate base material obtained from the process generally contains about 1 to about 14 percent moisture content.

It may be necessary to dehumidify the compressed air before it is introduced into the cyclone unit in high relative humidity (RH) conditions (e.g., RH greater than about 50 percent) to ensure that the feed material ("dry mix") can be attrited into granular form and does not build-up into a sticky or pasty mass inside the cyclone. The air may be dehumidified using a conventional cooling coil unit or similar device used for dehumidification of process air (e.g., see Figure 5, feature **1231).** The dehumidifer or air dryer **1231** may be a commercial unit for the general purpose (e.g., Model MDX 1000 air dryer from Motivair, Amherst, NJ).

The heat exchanger (cooler) **123,** dehumidifier **1231,** and heater **1232** that typically is not used in practicing embodiments of this invention, are units of a subsystem represented as air treatment module **1233** in Figure 5; control valves and the like may be used to selectively control and manage air flow through the various air treatment units in module **1233.**

A granular chocolate base product is obtained which can be stably stored and conveniently transported at ambient conditions, or may be used immediately in food manufacture, particularly chocolate manufacture. Generally, the dry mix including the cocoa nibs is subjected to grinding into a smaller particle size within a relatively short period of time (e.g., within several seconds) in a grinding process performed in one unit operation as implemented on a cyclonic type system that may be operated in a manner whereby the dry mix may be physically acted upon in a beneficial manner. A ground chocolate base product is obtained in a granulated form (e.g., a solid fine particulate). Chocolate base products obtained by the above-described grinding process preferably have commercially useful particle sizes, such as for chocolate manufacture. In one embodiment, the granular chocolate base product obtained by processing chocolate ingredients without chocolate liquor according to an embodiment of this invention generally may have a particle size of less than about 300 microns, particularly less than about 200 microns, particularly about 20 to about 200 microns, and more particularly about 20 to about 35 microns. In one embodiment, the solid particulate product obtained as the bottoms of the cyclone comprise at least about 50 percent ground chocolate base product having a particle size of about less than about 300 microns. Particles in the desired range (generally less than about 300 microns, preferably less than about 200 microns, and more preferably less than about 50 microns) can be passed to the remainder of the process and particles with higher particle sizes can be used for other purposes or recirculated through the vortex grinding system for further reduction.

The resulting chocolate base product comprises a useful commodity. Chocolate base made in this manner may be used in chocolate manufacture (such as described below), or alternatively may be used, for example, as a flavorant (and for color) in such materials as cake mixes, frostings, cookies, chocolate, drink mixes, and the like.

As discussed above, significant particle size reduction of the cocoa and dry ingredients may be achieved in the vortex-generating apparatus **101** sufficient to reduce or even eliminate the need for confectionery refining steps, thereby reducing or eliminating the significant costs otherwise associated with the maintenance and repair of confectionery refiners. Preferably, the cocoa particles are reduced to a particle size below about 35 microns to ensure the correct chocolate rheology, maximize fat release, and minimize maintenance of the confectionery refiners. Traditionally, the chocolate industry uses a two-step refining process to reduce the particle size of the cocoa and dry ingredients. Typically, this is a 2-roll pre-refiner followed by a 5-roll final refiner. Due to the significant particle size reduction of the cocoa and dry ingredients that is achieved in the cyclonic processing system, refining needs are reduced or eliminated.

Referring again to Figure 2, if desired or needed, further particle size reduction of the flowable powder optionally may be obtained by passing the chocolate base powder obtained from the cyclonic process system described above through a confectionery refiner. For instance, the flowable powder obtained by passing the chocolate base powder obtained from the cyclonic process system can be processed with 2 or 5-roll refiner with the benefit of having a higher capacity at the refining process. Alternatively, refiners can be eliminated through the use of a mill, such as a ball mill, operated in parallel to or after conching, described below. The chocolate base powder is then fed to the conching process, where other ingredients, such as cocoa butter, anhydrous milk fat, emulsifiers (e.g., lecithin), flavors (e.g., vanillin) are added, creating a chocolate mass. As known, conching generally involves kneading the chocolate mixture with additional cocoa butter and other remaining chocolate ingredients for an extended period of time sufficient to give it its final smoothness and creaminess and remove any residual moisture. Optionally, if further particle size reduction of the chocolate mass is required, the chocolate mass can be recirculated through a mill (e.g., ball mill), while conching, or passed through such a mill after conching. Optionally, the chocolate mass can be further processed in an evaporation unit (not shown), such as a thin film evaporator, in a conventional manner to drive off unwanted volatile components and improve the product taste. The chocolate mass can then be tempered, formed and cooled to provide a finished chocolate product according to a traditional procedure. As known, during tempering the liquid chocolate generally cools and solidifies, and the cocoa butter forms crystals. To temper chocolate, it preferably is heated and cooled under controlled conditions so that a fine, even-grained texture is developed. Typically, care is taken not to overheat the chocolate at this stage. Careful tempering also reduces the tendency of chocolate to bloom.

The described process according to embodiments of the present invention makes it possible to reduce and even completely eliminate cocoa liquor processing from chocolate manufacturing. This eliminates the need for costly milling and handling of cocoa liquor as well as its shipping and storing in heated vessels, among other advantages and improvements.

Several chocolate formulation ingredients have been mentioned in the illustrations set forth herein. Further details on these categories of ingredients are included below.

Cocoa nibs generally have a cocoa butter content of about 50 to about 55 percent, which melts at approximately 30°C. Unroasted cocoa beans and cocoa nibs generally have moisture contents below about 9 percent and below about 6 percent, respectively. Both roasted cocoa beans and cocoa nibs generally have moisture contents below about 4 percent. The size of the roasted or unroasted cocoa beans or cocoa nibs is not particularly limited, but generally may range from about 1000 to about 30,000 microns in the longest dimension.

Natural cocoa butter may primarily comprise triglycerides of acids such as oleic acid, palmitic acid, and stearic acid. During conching, the fat used will normally consist of cocoa butter and/or butterfat and/or cocoa butter equivalent (CBE). CBE's are fats with a composition similar to cocoa butter, chemically and physically, normally made from nonlauric fats; CBEs are currently permitted by regulations in an amount up to 5 percent in some countries. The present invention is further applicable to compositions in which some of the cocoa butter is replaced during conching by a partly or wholly non-metabolisable fat (e.g., Caprenin).

The dairy solids may comprise, for example, whole milk powder, whey proteins, or low fat milk solids. The low fat milk solids preferably contain less than 5 percent fat, more preferably less than 2 percent fat and are most preferably skimmed milk powder, or ingredients thereof or recombined dairy solids. The sweetener preferably comprises a nutritive carbohydrate sweetener, and more preferably is a sugar, in the form of a dry powder. The dry powder may be crystalline. The sugar used may be, for example, sucrose, glucose, dextrose, lactose, fructose, invert sugar, corn syrup solids or sugar replacers such as polyols (e.g., sorbitol, mannitol, xylitol, maltitol, lactitol, polydextrose, and the like) as well as mixtures thereof. Preferably, the sugar used is sucrose alone but, if desired, one or more other sugars may be used together with sucrose in a minor amount. If desired, a part or all of the sugar or sugar replacer may be replaced by a low calorie sweetening agent such as a sucralose, cyclamate, aspartame, NutraSweet, and the like as well as mixtures thereof.

In order to improve the viscosity during processing of the chocolate composition, at least one emulsifier will normally be included as an ingredient. Typically, such emulsifiers include lecithin derived from soya bean, safflower, corn, and the like, fractionated lecithins enriched with either phosphatidyl choline, phosphatidyl ethanolamine, phosphatidyl inositol; emulsifiers derived from oats, mono- and diglycerides and their tartaric esters, monosodium phosphate derivatives of mono- and diglycerides of edible fats and oils, sorbitan monostearate, polyoxyethylene sorbitan monostearate, hydroxylated lecithin, synthetic phospholipids such as ammonium pliosphatides, lactylated fatty acid esters of glycerol and propylene glycol, polyglycerol esters of fatty acids, propylene glycol mono- and diesters of fats and fatty acids.

Chocolate compositions manufactured in accordance with the present invention may further include flavorings, especially those traditionally associated with chocolate, such as vanilla, fruit flavorings, mint flavorings, finely powdered nuts, and the like. Edible inclusions, such as nuts or nut fragments also may be added to the chocolate compositions in conventional manners and at convenient times during manufacturing.

The moisture content is also an important factor which influences the texture of the chocolate mass and the optimal level is desirable. A reduced moisture content can result in a less viscous texture because of the thickening effect which minor amounts of water can produce in fat-based materials. The resultant chocolate composition which includes the mixture of chocolate base and cocoa butter fat preferably has a moisture content of not more than about 1 percent.

The chocolate composition may be a plain chocolate, milk chocolate, or other type of chocolate composition and may be molded or extruded to form a bar (filled or solid), it may be molded or deposited to form a solid or a filled chocolate which may be of a single mouthful size, or it may take the form of vermicelli chocolate, chocolate flakes, or nut chocolate derived from any of such chocolate types. Alternatively, it may be used as a coating or encapsulating chocolate. Indeed, the chocolate base compositions of this invention may be used to make any of the known types of chocolate products.

In the case of milk chocolate, the chocolate composition will normally comprise non-fat cocoa solids, fat, milk solids, nutritive carbohydrate sweetener and emulsifier. In the case of dark chocolate, the chocolate composition will normally comprise non-fat cocoa solids, fat, nutritive carbohydrate sweetener and emulsifier. As described above, the chocolate base may provide a preblended mixture of the non-fat cocoa solids, fat, milk solids and/or nutritive carbohydrate sweetener. Other chocolate ingredients also may be used in appropriate amounts for their intended purpose.

The Examples that follow are intended to illustrate, and not limit, the invention. All percentages are by weight, unless indicated otherwise.

**Example 1.** A dry mix was prepared by blending roasted cocoa nibs (17 percent), sucrose (60 percent), skim milk powder (17 percent), and sweet whey powder (6 percent). This composition was dictated by the desired finished chocolate recipe. The cocoa nibs used in these trials were a low roasted Ivory Coast variety having a fat content of about 55 percent. The dry mix blend was subjected to a WINDHEXE apparatus for circular vortex air-flow material grinding. The WINDHEXE apparatus was manufactured by Vortex Dehydration Systems, LLC, Hanover, Maryland. The basic configuration of that type of apparatus is described in U.S. Patent Application Publication 2002/0027173, and reference is made thereto. The process unit had two inlet ports equidistantly spaced around the upper portion of the apparatus through which the compressed air stream was concurrently introduced in a counter-clockwise direction.

Testing was performed in a WINDHEXE apparatus having a three-foot diameter chamber using compressed air introduced at 16°C (60°F), a rate of 1,000 cubic feet per minute (cfm), and a pressure of 50 psi. The feed rate of the dry mix blend was set for an approximate discharge of about 1 to about 1.5 pounds solid product per minute, and approximately 200 total pounds of dry mix was tested in the apparatus. The dry mix blend was loaded into a hopper that directly fed a screw feeder that fed into the WINDHEXE apparatus. A flowable powder product stream was discharged from the bottom of the cyclone in about 2-10 seconds. The flowable powder was collected and analyzed for particle size distribution (D90 was about 50 microns) and aroma compound formation. The flowable powder product discharged from the cyclone unit was used for producing chocolate.

For inventive Sample 1, a dry mix was processed in the cyclone as described above, and the resulting free-flowing powdered product was combined with cocoa butter, anhydrous milk fat, vanillin and lecithin for conch processing into milk chocolate using standard conching conditions. The dry mix and overall chocolate formulations had the contents and respective amounts as indicated in Table 1 below.

**Table 1: Chocolate Formulation**

| **Ingredients** | **Overall M ilk Chocolate Mix (%)** |
|---|---|
| **Dry Mix** | |
| Cocoa nibs | 13.1 |
| Sugar | 46.6 |
| Milk powders | 17.5 |

| **Added During Conching** | |
|---|---|
| Cocoa butter | 16.6 |
| Anhydrous Milk Fat | 4.5 |
| Flavors | 1.0 |
| Lecith in | 0.7 |

To prepare the chocolate, flowable powder product discharged from the cyclone unit was fed to a pilot plant conch together with the other chocolate ingredients introduced during conching. The conching was conducted over a period of approximately 5.5 hours. Conching was performed in a standard conch mixer (AOUSTIN) using standard conching conditions. During conching, the temperature of the chocolate mix was generally progressively increased from about 50 to about 85°C, before being cooled back to about 50°C before being unloaded. The chocolate mix was unloaded into a tempering machine in which it was molded into discrete tablets. The chocolate product was analyzed and sensorial tested.

For comparison, Sample 2 was prepared wherein a commercial ADM cocoa liquor was substituted for the dry mix. Except for the vortex grinding and the use of cocoa liquor, essentially the same procedure and ingredients were used as described in Sample 1, to prepare milk chocolate. For further comparison, a high quality commercially available chocolate (Sample 3) was used.

Analysis for the three batches of chocolate products are set forth in Table 2 below.

**Table 2: Properties**

| **Sample** | **D90 (microns)** | **Fat (%)** | **Moisture (%)** |
|---|---|---|---|
| 1 | 51.6 | 30 | 0.59 |
| 2 | 35.4 | 30.2 | 0.57 |
| 3 | 23.9 | 30.3 | 0.72 |

Sensory evaluation were carried out by a expert panel of chocolate testers. All of the samples provide excellent chocolate characteristics and sensor properties. It is expected that a second pass of the dry mix of sample 1 through the vortex grinder would result in further particle size reduction and use of such a dry mix would provide a chocolate product equivalent to the high quality commercial chocolate product.

**Example 2.** The effect of cyclone processing on dry mixes comprising a mixture of milk powder, sugar, with and without cocoa nibs, was investigated. These respective dry mixes had the formulations as indicated in Tables 3 and 4 below. The WINDHEXE apparatus was the same basic configuration as that described for Example 1, and reference is made thereto. The conditions of this experiment were also similar to that example, and reference is made thereto. A portion of the dry mix lacking cocoa nibs was processed in the cyclone, while another portion was not.

**Table 3: Dry Mix Composition without Cocoa Nibs:**

| **Ingredients** | **Amount (%)** |
|---|---|
| Sucrose | 72.6 |
| Skimmed Milk & Sweet Whey Powders | 27.4 |
| **Total** | 100 |

**Table 4: Dry Mix Composition with Cocoa Nibs:**

| **Ingredients** | **Amount (%)** |
|---|---|
| Sucrose | 60.3 |
| Skimmed Milk & Sweet whey Powders | 22.7 |
| Cocoa Nibs | 17.0 |
| **Total** | 100 |

The granulated product materials of each test run were collected and subjected to fat assay and particle size distribution analysis, and the results are indicated in Table 5 below.

**Table 5: Powder Analysis**

| **Powder Sample** | **Total Fat (%)** | **D90 (microns)** |
|---|---|---|
| Dry Mix w/o nibs and w/o cyclone treatment | 0.2 | 724.7 |
| Dry Mix w/o nibs but cyclone treated | 0.1 | 36.9 |
| Dry Mix with nibs and cyclone treated | 10 | 50.8 |

Particle size distribution measurements were made using a Malvern 2000 Particle Size Analyzer.

The granulated product materials of each test sample that received cyclone treatment also were subjected to flavor analysis. The cyclone-processed milk mix had a slightly altered flavor compared to a standard dry mix that did not contain nibs and was not cyclone-processed. However, both that standard sample, and the cyclone-treated version thereof, were low in aroma when compared with the cyclone-processed dry mix prepared with cocoa nibs.

Example 3. The flavor profile of volatile compounds in cocoa nibs subjected to vortex-processing as described herein was evaluated in comparison to unroasted, unprocessed cocoa nibs to investigate the impact of the cyclone processing on flavor characteristics of the nibs.

Separate batches of roasted cocoa nibs (3 to 4 percent moisture) and unroasted cocoa nibs (5 to 6 percent moisture, 54 percent lipid content) were fed into a WINDHEXE apparatus for circular vortex air-flow material grinding. The WINDHEXE apparatus was the same basic configuration as that described for Example 1, and reference is made thereto. The conditions of this experiment were also similar to that example, and reference is made thereto. Granulated product material of the test runs was collected and subjected to flavor profile analysis. The flavor profiles of nibs processed in the cyclone and unprocessed nibs were evaluated by gas chromatography-mass spectrometry. The processed nibs showed minor increases in volatile compound concentrations as compared to the unprocessed nibs used as a control.

There was essentially no difference in milling performance between roasted cocoa nibs and unroasted cocoa nibs in the vortex grinder. Because of their high moisture content, it is very difficult to grind unroasted cocoa nibs using conventional or traditional chocolate milling equipment. Using the present vortex grinding system, unroasted cocoa nibs can be easily ground to provide an excellent dry chocolate mixture.

While the invention has been particularly described with specific reference to particular process and product embodiments, it will be appreciated that various alterations, modifications and adaptations may be based an the present disclosure, and are intended to be within the spirit and scope of the present invention as defined by the following claims. In particular, the features of all independent and dependent claims can be combined with each other as long as they are not contradictory.

## Claims

1. A method for preparation of a chocolate base composition without using cocoa liquor, wherein the chocolate base composition is suitable for preparing chocolate products, said method comprising:
(1) providing a mixture comprising whole cocoa beans, cocoa nibs, or mixtures thereof and optionally one or more dry chocolate-making edible ingredient, wherein the mixture is dry and flowable;
(2) grinding the mixture in a vortex grinding apparatus using a vortex-forming compressed gas without using moving mechanical parts, to provide the chocolate base composition, wherein the temperature within the vortex grinding apparatus during grinding is less than 30°C, wherein no cocoa liquor is formed or generated during vortex grinding, wherein the chocolate base composition is in a granular form with a particle size of less than 300 microns, and wherein the chocolate base composition is suitable for preparing chocolate products.

2. The method of claim 1, wherein at least one chocolate-making edible ingredient is included in the mixture.

3. The method of claim 2, wherein the at least one chocolate-making edible ingredient is a dairy solid, a sweetener, cocoa powder, or mixtures thereof.

4. The method of claim 2, wherein the at least one chocolate-making edible ingredient is a sweetener.

5. The method of claim 4, wherein the sweetener is sucrose.

6. The method of claim 4 or 5, wherein the mixture further contains dairy solids.

7. The method of any of the preceding claims, wherein the particle size of the chocolate base composition is less than 200 microns.

8. The method of any of the preceding claims, wherein the mixture contains less than 14 percent total moisture.

9. The method of claim 4, wherein mixture contains 15 to 85 percent cocoa nibs and 15 to 85 percent sweetener.

10. The method of claim 6, wherein the mixture contains 5 to 30 percent cocoa nibs, 30 to 75 percent sweetener, and 10 to 40 percent dairy solids.

11. The method of claim 3, wherein the vortex-forming compressed gas is air, and wherein the temperature within the vortex grinding apparatus during grinding is less than 20°C.

12. The method of claim 11, wherein the particle size of the chocolate base composition is 20 to 35 microns.

13. The method of any of the preceding claims, wherein the whole cocoa beans, cocoa nibs, or mixtures thereof are unfermented.

14. The method of any of the preceding claims, wherein the whole cocoa beans, cocoa nibs, or mixtures thereof are unroasted.

15. The method of claim 1, further comprising the steps of
(1) conching the chocolate base composition, cocoa butter, and an emulsifier to form a chocolate material;
(2) tempering the chocolate material;
(3) forming the chocolate material into a chocolate product; and
(4) cooling the chocolate product.

16. The method of claim 15, wherein the cocoa material is whole cocoa beans, cocoa nibs, or mixtures thereof.

17. The method of claim 16, wherein at least one chocolate-making edible ingredient is included in the mixture and wherein the at least one chocolate-making edible ingredient is a dairy solid, a sweetener, cocoa powder, or mixtures thereof.

18. The method of claim 17, wherein the emulsifier is lecithin and wherein the particle size of the chocolate base composition is less than 200 microns.

19. The method of claim 17, wherein the chocolate base composition is refined before the conching step to reduce the particle size of the chocolate base composition and wherein the particle size of the chocolate base composition is less than 200 microns before the milling conching step.

20. The method of any of claims 17 to 19, wherein the chocolate material is milled before the tempering step to reduce the particle size of the chocolate material.

21. The method of claim 15, wherein at least a portion of the milled chocolate material is returned to the conching step before being passed to the tempering step.

22. The method of any of claims 17 to 21, wherein the particle size of the chocolate material is 20 to 35 microns before the tempering step.

23. The method of any of claims 17 to 22, wherein the at least one chocolate-making edible ingredient is a sweetener.

24. The method of claim 23, wherein the sweetener is sucrose.

25. The method of claim 23 or 24, wherein the mixture further contains dairy solids.

26. The method of claim 23, wherein the mixture contains 15 to 85 percent cocoa nibs and 15 to 80 percent sweetener.

27. The method of claim 25, wherein the mixture contains 5 to 30 percent cocoa nibs, 30 to 75 percent sweetener, and 10 to 40 percent dairy solids.

28. The method of claim 16 or 17, wherein the vortex-forming compressed gas is air, and wherein the temperature within the vortex grinding apparatus during grinding is less than 20°C.

29. The method of claim 1, further comprising the steps of
(1) introducing compressed gas into an enclosure that includes a truncated conical shaped section, wherein the introduced gas travels along a downward path through the enclosure, including the conical section, to a lower end thereof, and gas reaching the lower end flows back up and exits the enclosure via an exhaust outlet;
(2) introducing into the enclosure, the mixture comprising whole cocoa beans, cocoa nibs, or a mixture thereof and optionally one or more chocolate-making edible ingredient, as flowable dry ingredients, which mixture is entrained in the introduced gas traveling downward through the enclosure, wherein at least a portion of the mixture is ground before reaching the lower end of the enclosure to form a granular chocolate base composition;
(3) discharging the granular chocolate base composition from the lower end of the enclosure;
wherein the temperature within enclosure during grinding is less than 30°C, wherein the discharged chocolate base composition is in a granular form with a particle size of less than 300 microns, and wherein the discharged chocolate base composition is suitable for preparing chocolate products.

30. The method of claim 29, wherein at least one chocolate-making edible ingredient is included in the mixture, wherein the temperature within enclosure during grinding is less than 20°C, and wherein the discharged chocolate base composition is in a granular form with a particle size of less than 200 microns.

31. The method of claim 29, wherein the at least one chocolate-making edible ingredient is a dairy solid, a sweetener, cocoa powder, or mixtures thereof, wherein the temperature within enclosure during grinding is less than 20°C, wherein the discharged chocolate base composition is in a granular form with a particle size of less than 200 microns.

32. The method of claim 30 or 31, wherein the cocoa material is cocoa nibs and the particle size is less than 50 microns.

33. A method for preparation of a white chocolate base composition, wherein the white chocolate base composition is suitable for preparing white chocolate products, said method comprising:
(1) providing a mixture comprising a sweetener and dairy solids, wherein the mixture is dry and flowable;
(2) grinding the mixture in a vortex grinding apparatus using a vortex-forming compressed gas without using moving mechanical parts, to provide the white chocolate base composition,
wherein the white chocolate base composition is in a granular form with a particle size of less than 300 microns, and wherein the white chocolate base composition is suitable for preparing white chocolate products.

34. The method of claim 33, wherein the particle size is less than 50 microns.

35. The method of claim 33, further comprising the steps of
(1) introducing compressed gas into an enclosure that includes a truncated conical shaped section, wherein the introduced gas travels along a downward path through the enclosure, including the conical section, to a lower end thereof, and gas reaching the lower end flows back up and exits the enclosure via an exhaust outlet;
(2) introducing into the enclosure, the mixture comprising a sweetener and dairy solids, as flowable dry ingredients, which mixture is entrained in the introduced gas traveling downward through the enclosure, wherein at least a portion of the mixture is ground before reaching the lower end of the enclosure to form a granular white chocolate base composition;
(3) discharging the granular white chocolate base composition from the lower end of the enclosure;
wherein the discharged white chocolate base composition is in a granular form with a particle size of less than 300 microns, and wherein the discharged white chocolate base composition is suitable for preparing white chocolate products.

36. The method of claim 35, wherein the particle size is less than 50 microns.

## Patentansprüche

1. Verfahren zur Zubereitung einer Schokoladen-Basiszusammensetzung ohne Verwendung von Kakao-Liquor, wobei die Schokoladen-Basiszusammensetzung zur Zubereitung von Schokoladenprodukten geeignet ist, wobei das Verfahren umfasst:
(1) Bereitstellen einer Mischung mit ganzen Kakaobohnen, Kakaobohnenstückchen oder Mischungen davon und optional einem oder mehr trockenen essbaren Schokoladenherstellungsbestandteil, wobei die Mischung trocken und fließfähig ist;
(2) Mahlen der Mischung in einer Wirbelmahlvorrichtung, die ein Wirbel-ausbildendes komprimiertes Gas verwendet, ohne Verwendung von sich bewegenden mechanischen Teilen, um die Schokoladen-Basiszusammensetzung bereitzustellen, wobei die Temperatur innerhalb der Wirbelmahlvorrichtung während des Mahlens weniger als 30°C beträgt, wobei während des Wirbelmahlens kein Kakao-Liquor ausgebildet oder erzeugt wird, wobei die Schokoladen-Basiszusammensetzung in einer Granulatform mit einer Partikelgröße von weniger als 300 Mikrometer ist, und wobei die Schokoladen-Basiszusammensetzung zum Zubereiten von Schokoladenprodukten geeignet ist.

2. Verfahren nach Anspruch 1, wobei zumindest ein essbarer Schokoladenherstellungsbestandteil in der Mischung enthalten ist.

3. Verfahren nach Anspruch 2, wobei der zumindest eine essbare Schokoladenherstellungsbestandteil ein Milchfeststoff, ein Süßungsmittel, Kakaopulver oder Mischungen davon ist.

4. Verfahren nach Anspruch 2, wobei der zumindest eine essbare Schokoladenherstellungsbestandteil ein Süßungsmittel ist.

5. Verfahren nach Anspruch 4, wobei das Süßungsmittel Sucrose ist.

6. Verfahren nach Anspruch 4 oder 5, wobei die Mischung ferner Milchfeststoffe enthält.

7. Verfahren nach einem der vorhergehenden Ansprüche, wobei die Partikelgröße der Schokoladen-Basiszusammensetzung weniger als 200 Mikrometer ist.

8. Verfahren nach einem der vorhergehenden Ansprüche, wobei die Mischung weniger als 14 Prozent Gesamtfeuchtigkeit enthält.

9. Verfahren nach Anspruch 4, wobei die Mischung 15 bis 85 Prozent Kakaobohnenstückchen und 15 bis 85 Prozent Süßungsmittel enthält.

10. Verfahren nach Anspruch 6, wobei die Mischung 5 bis 30 Prozent Kakaobohnenstückchen, 30 bis 75 Prozent Süßungsmittel und 10 bis 40 Prozent Milchfeststoffe enthält.

11. Verfahren nach Anspruch 3, wobei das Wirbel-ausbildende komprimierte Gas Luft ist, und wobei die Temperatur innerhalb der Wirbelmahlvorrichtung während des Mahlens weniger als 20°C beträgt.

12. Verfahren nach Anspruch 11, wobei die Partikelgröße der Schokoladen-Basiszusammensetzung 20 bis 35 Mikrometer ist.

13. Verfahren nach einem der vorhergehenden Ansprüche, wobei die ganzen Kakaobohnen, Kakaobohnenstückchen oder Mischungen davon unfermentiert sind.

14. Verfahren nach einem der vorhergehenden Ansprüche, wobei die ganzen Kakaobohnen, Kakaobohnenstückchen oder Mischungen davon ungeröstet sind.

15. Verfahren nach Anspruch 1, ferner folgende Schritte umfassend:
(1) Conchieren der Schokoladen-Basiszusammensetzung, Kakaobutter und eines Emulgators, um ein Schokoladenmaterial auszubilden;
(2) Temperieren des Schokoladenmaterials;
(3) Ausbilden des Schokoladenmaterials in ein Schokoladenprodukt; und
(4) Kühlen des Schokoladenprodukts.

16. Verfahren nach Anspruch 15, wobei das Kakaomaterial ganze Kakaobohnen, Kakaobohnenstückchen oder Mischungen davon ist.

17. Verfahren nach Anspruch 16, wobei der zumindest eine essbare Schokoladenherstellungsbestandteil in der Mischung enthalten ist, und wobei der zumindest eine essbare Schokoladenherstellungsbestandteil ein Milchfeststoff, ein Süßungsmittel, Kakaopulver oder Mischungen davon ist.

18. Verfahren nach Anspruch 17, wobei der Emulgator Lezithin ist, und wobei die Partikelgröße der Schokoladen-Basiszusammensetzung weniger als 200 Mikrometer ist.

19. Verfahren nach Anspruch 17, wobei die Schokoladen-Basiszusammensetzung vor dem Conchier-Schritt verfeinert wird, um die Partikelgröße der Schokoladen-Basiszusammensetzung zu verringern, und wobei die Partikelgröße der Schokoladen-Basiszusammensetzung weniger als 200 Mikrometer vor dem Mahl-Conchier-Schritt ist.

20. Verfahren nach einem der Ansprüche 17 bis 19, wobei das Schokoladenmaterial vor dem Temperierschritt gemahlen wird, um die Partikelgröße des Schokoladenmaterials zu verringern.

21. Verfahren nach Anspruch 15, wobei zumindest ein Teil des gemahlenen Schokoladenmaterials zu dem Conchier-Schritt zurückgeführt wird, bevor es zu dem Temperierschritt geführt wird.

22. Verfahren nach einem der Ansprüche 17 bis 21, wobei die Partikelgröße des Schokoladenmaterials 20 bis 35 Mikrometer vor dem Temperierschritt ist.

23. Verfahren nach einem der Ansprüche 17 bis 22, wobei der zumindest eine essbare Schokoladenherstellungsbestandteil ein Süßungsmittel ist.

24. Verfahren nach Anspruch 23, wobei das Süßungsmittel Sucrose ist.

25. Verfahren nach Anspruch 23 oder 24, wobei die Mischung ferner Milchfeststoffe enthält.

26. Verfahren nach Anspruch 23, wobei die Mischung 15 bis 85 Prozent Kakaobohnenstückchen und 15 bis 80 Prozent Süßungsmittel enthält.

27. Verfahren nach Anspruch 25, wobei die Mischung 5 bis 30 Prozent Kakaobohnenstückchen, 30 bis 75 Prozent Süßungsmittel und 10 bis 40 Prozent Milchfeststoffe enthält.

28. Verfahren nach Anspruch 16 oder 17, wobei das Wirbel-ausbildende komprimierte Gas Luft ist, und wobei die Temperatur innerhalb der Wirbelmahlvorrichtung während des Mahlens weniger als 20°C beträgt.

29. Verfahren nach Anspruch 1, ferner folgende Schritte umfassend:
(1) Einführen von komprimiertem Gas in eine Einhausung, die einen kegelstumpfartig konisch geformten Abschnitt umfasst, wobei sich das eingeführte Gas entlang eines Pfads nach unten durch die Einhausung, einschließlich des konischen Abschnitts, zu einem unteren Ende davon bewegt, und wobei Gas, welches das untere Ende erreicht, zurück nach oben strömt und aus der Einhausung über einen Abgasauslass austritt;
(2) Einführen in die Einhausung der Mischung mit ganzen Kakaobohnen, Kakaobohnenstückchen oder einer Mischung davon und optional einem oder mehr essbaren Schokoladenherstellungsbestandteil, als fließfähige trockene Bestandteile, wobei die Mischung in dem eingeführten Gas mitgerissen wird, das sich nach unten durch die Einhausung bewegt, wobei zumindest ein Teil der Mischung gemahlen wird, bevor sie das untere Ende der Einhausung erreicht, um eine Granulat-Schokoladen-Basiszusammensetzung auszubilden;
(3) Ablassen der Granulat-Schokoladen-Basiszusammensetzung aus dem unteren Ende der Einhausung;
wobei die Temperatur innerhalb der Einhausung während des Mahlens weniger als 30°C beträgt, wobei die abgelassene Schokoladen-Basiszusammensetzung in einer Granulatform mit einer Partikelgröße von weniger als 300 Mikrometer ist, und
wobei die abgelassene Schokoladen-Basiszusammensetzung zum Zubereiten von Schokoladenprodukten geeignet ist.

30. Verfahren nach Anspruch 29, wobei der zumindest eine essbare Schokoladenherstellungsbestandteil in der Mischung enthalten ist, wobei die Temperatur innerhalb der Einhausung während des Mahlens weniger als 20°C beträgt, und wobei die abgelassene Schokoladen-Basiszusammensetzung in einer Granulatform mit einer Partikelgröße von weniger als 200 Mikrometer ist.

31. Verfahren nach Anspruch 29, wobei der zumindest eine essbare Schokoladenherstellungsbestandteil ein Milchfeststoff, ein Süßungsmittel, Kakaopulver oder Mischungen davon ist, wobei die Temperatur innerhalb der Einhausung während des Mahlens weniger als 20°C beträgt, wobei die abgelassene Schokoladen-Basiszusammensetzung in einer Granulatform mit einer Partikelgröße von weniger als 200 Mikrometer ist.

32. Verfahren nach Anspruch 30 oder 31, wobei das Kakaomaterial Kakaobohnenstückchen sind, und die Partikelgröße weniger als 50 Mikrometer ist.

33. Verfahren zur Zubereitung einer weißen Schokoladen-Basiszusammensetzung, wobei die weiße Schokoladen-Basiszusammensetzung zur Zubereitung von weißen Schokoladenprodukten geeignet ist, wobei das Verfahren umfasst:
(1) Bereitstellen einer Mischung mit einem Süßungsmittel und Milchfeststoffen, wobei die Mischung trocken und fließfähig ist;
(2) Mahlen der Mischung in einer Wirbelmahlvorrichtung, die ein Wirbel-ausbildendes komprimiertes Gas verwendet, ohne Verwendung von sich bewegenden mechanischen Teilen, um die weiße Schokoladen-Basiszusammensetzung bereitzustellen, wobei die weiße Schokoladen-Basiszusammensetzung in einer Granulatform mit einer Partikelgröße von weniger als 300 Mikrometer ist, und wobei die weiße Schokoladen-Basiszusammensetzung zum Zubereiten von weißen Schokoladenprodukten geeignet ist.

34. Verfahren nach Anspruch 33, wobei die Partikelgröße weniger als 50 Mikrometer ist.

35. Verfahren nach Anspruch 33, ferner folgende Schritte umfassend:
(1) Einführen von komprimiertem Gas in eine Einhausung, die einen kegelstumpfartig konisch geformten Abschnitt umfasst, wobei sich das eingeführte Gas entlang eines Pfads nach unten durch die Einhausung, einschließlich des konischen Abschnitts, zu einem unteren Ende davon bewegt, und wobei Gas, welches das untere Ende erreicht, zurück nach oben strömt und aus der Einhausung über einen Abgasauslass austritt;
(2) Einführen in die Einhausung der Mischung mit einem Süßungsmittel und Milchfeststoffen, als fließfähige trockene Bestandteile, wobei die Mischung in dem eingeführten Gas mitgerissen wird, das sich nach unten durch die Einhausung bewegt, wobei zumindest ein Teil der Mischung gemahlen wird, bevor sie das untere Ende der Einhausung erreicht, um eine granulatförmige weiße Schokoladen-Basiszusammensetzung auszubilden;
(3) Ablassen der granulatförmigen weißen Schokoladen-Basiszusammensetzung aus dem unteren Ende der Einhausung;
wobei die abgelassene weiße Schokoladen-Basiszusammensetzung in eine Granulatform mit einer Partikelgröße von weniger als 300 Mikrometer ist, und wobei die abgelassene weiße Schokoladen-Basiszusammensetzung zum Zubereiten von weißen Schokoladenprodukten geeignet ist.

36. Verfahren nach Anspruch 35, wobei die Partikelgröße weniger als 50 Mikrometer ist.

## Revendications

1. Procédé pour la préparation d'une composition de base de chocolat sans utiliser de liqueur de cacao, dans lequel la composition de base de chocolat est apte à la préparation de produits en chocolat, ledit procédé comprenant les étapes consistant :
(1) à fournir un mélange comprenant des fèves de cacao entières, des brisures de fèves de cacao ou leurs mélanges, et facultativement un ou plusieurs ingrédients comestibles secs pour la préparation du chocolat, le mélange étant sec et fluide ;
(2) à broyer le mélange dans un appareil de broyage à tourbillonnement en utilisant un gaz comprimé de formation de tourbillons sans utiliser de pièces mécaniques mobiles, pour fournir la composition de base de chocolat, la température dans l'appareil de broyage à tourbillonnement au cours du broyage étant inférieure à 30°C, aucune liqueur de cacao n'étant formée ni engendrée au cours du broyage par tourbillonnement, la composition de base de chocolat étant sous une forme granulaire ayant une dimension des particules inférieure à 300 micromètres, et la composition de base de chocolat étant apte à la préparation de produits en chocolat.

2. Procédé suivant la revendication 1, dans laquelle au moins un ingrédient comestible de préparation du chocolat est incorporé au mélange.

3. Procédé suivant la revendication 2, dans lequel ledit au moins un ingrédient comestible de préparation du chocolat est une matière sèche de produit laitier, un agent édulcorant, la poudre de cacao ou leurs mélanges.

4. Procédé suivant la revendication 2, dans lequel ledit au moins un ingrédient comestible de préparation du chocolat est un agent édulcorant.

5. Procédé suivant la revendication 4, dans lequel l'agent édulcorant est le saccharose.

6. Procédé suivant la revendication 4 ou 5, dans lequel le mélange contient en outre de la matière sèche de produit laitier.

7. Procédé suivant l'une quelconque des revendications précédentes, dans lequel la dimension de particules de la composition de base de chocolat est inférieure à 200 micromètres.

8. Procédé suivant l'une quelconque des revendications précédentes, dans lequel le mélange contient moins de 14 pour cent d'humidité totale.

9. Procédé suivant la revendication 4, dans laquelle le mélange contient 15 à 85 pour cent de brisures de fèves de cacao et 15 à 85 pour cent d'agent édulcorant.

10. Procédé suivant la revendication 6, dans lequel le mélange contient 5 à 30 pour cent de brisures de fèves de cacao, 30 à 75 pour cent d'agent édulcorant et 10 à 40 pour cent de matière sèche de produit laitier.

11. Procédé suivant la revendication 3, dans lequel le gaz comprimé de formation de tourbillons est l'air, et dans lequel la température dans l'appareil de broyage à tourbillonnement au cours du broyage est inférieure à 20°C.

12. Procédé suivant la revendication 11, dans lequel la dimension de particules de la composition de base de chocolat est de 20 à 35 micromètres.

13. Procédé suivant l'une quelconque des revendications précédentes, dans lequel les fèves entières de cacao, les brisures de fèves de cacao ou leurs mélanges sont non fermentés.

14. Procédé suivant l'une quelconque des revendications précédentes, dans lequel les fèves entières de cacao, les brisures de fèves de cacao ou leurs mélanges sont non torréfiés.

15. Procédé suivant la revendication 1, comprenant en outre les étapes consistant :
(1) à effectuer le conchage de la composition de base de chocolat, de beurre de cacao et d'un émulsionnant pour former une matière du type du chocolat ;
(2) à effectuer le tempérage de la matière du type du chocolat ;
(3) à transformer la matière du type du chocolat en un produit en chocolat ; et
(4) à refroidir le produit en chocolat.

16. Procédé suivant la revendication 15, dans lequel la matière du type du cacao consiste en fèves entières de cacao, en brisures de fèves de cacao ou leurs mélanges.

17. Procédé suivant la revendication 16, dans lequel au moins un ingrédient comestible de préparation du chocolat est incorporé au mélange et dans lequel ledit au moins un ingrédient comestible de préparation du chocolat est une matière sèche de produit laitier, un agent édulcorant, de la poudre de cacao ou leurs mélanges.

18. Procédé suivant la revendication 17, dans lequel l'émulsionnant est la lécithine et dans lequel la dimension de particules de la composition de base de chocolat est inférieure à 200 micromètres.

19. Procédé suivant la revendication 17, dans lequel la composition de base de chocolat est raffinée avant l'étape de conchage pour réduire la dimension de particules de la composition de base de chocolat et dans lequel la dimension de particules de la composition de base de chocolat est inférieure à 200 micromètres avant l'étape de conchage par broyage.

20. Procédé suivant l'une quelconque des revendications 17 à 19, dans lequel la matière du type du chocolat est broyée avant l'étape de tempérage pour réduire la dimension de particules de la matière du type du chocolat.

21. Procédé suivant la revendication 15, dans lequel au moins une portion de la matière du type du chocolat broyée est ramenée à l'étape de conchage avant passage à l'étape de tempérage.

22. Procédé suivant l'une quelconque des revendications 17 à 21, dans lequel la dimension de particules de la matière du type du chocolat est de 20 à 35 micromètres avant l'étape de tempérage.

23. Procédé suivant l'une quelconque des revendications 17 à 22, dans lequel ledit au moins un ingrédient comestible de préparation du chocolat est un agent édulcorant.

24. Procédé suivant la revendication 23, dans lequel l'agent édulcorant est le saccharose.

25. Procédé suivant la revendication 23 ou 24, dans lequel le mélange contient en outre de la matière sèche de produit laitier.

26. Procédé suivant la revendication 23, dans lequel le mélange contient 15 à 85 pour cent de brisures de fèves de cacao et 15 à 80 pour cent d'agent édulcorant.

27. Procédé suivant la revendication 25, dans lequel le mélange contient 5 à 30 pour cent de brisures de fèves de cacao, 30 à 75 pour cent d'agent édulcorant et 10 à 40 pour cent de matière sèche de produit laitier.

28. Procédé suivant la revendication 16 ou 17, dans lequel le gaz comprimé de formation de tourbillons est l'air, et dans lequel la température dans l'appareil de broyage à tourbillonnement au cours du broyage est inférieure à 20°C.

29. Procédé suivant la revendication 1, comprenant en outre les étapes consistant:
(1) à introduire un gaz comprimé dans une enceinte qui renferme une section en forme de cône tronqué, où le gaz introduit suit un trajet descendant à travers l'enceinte, y compris la section conique, jusqu'à une extrémité inférieure de celle-ci, et le gaz atteignant l'extrémité inférieure remonte et quitte l'enceinte par un orifice d'échappement ;
(2) à introduire dans l'enceinte le mélange comprenant des fèves entières de cacao, des brisures de fèves de cacao ou leurs mélanges, et facultativement un ou plusieurs ingrédients comestibles de préparation du chocolat, sous forme d'ingrédients secs fluides, mélange qui est entraîné dans le gaz introduit descendant à travers l'enceinte, où au moins une portion du mélange est broyée avant d'atteindre l'extrémité inférieure de l'enceinte pour former une composition de base de chocolat granulaire ;
(3) à décharger la composition de base de chocolat granulaire par l'extrémité inférieure de l'enceinte ;
dans lequel la température à l'intérieur de l'enceinte au cours du broyage est inférieure à 30°C, dans lequel la composition de base de chocolat déchargée est sous une forme granulaire ayant une dimension de particules inférieure à 300 micromètres, et dans lequel la composition de base de chocolat déchargée est apte à la préparation de produits en chocolat.

30. Procédé suivant la revendication 29, dans lequel au moins un ingrédient comestible de préparation du chocolat est incorporé au mélange, dans lequel la température à l'intérieur de l'enceinte au cours du broyage est inférieure à 20°C, et dans lequel la composition de base de chocolat déchargée est sous une forme granulaire ayant une dimension de particules inférieure à 200 micromètres.

31. Procédé suivant la revendication 29, dans lequel ledit au moins un ingrédient comestible de préparation du chocolat est une matière sèche de produit laitier, un agent édulcorant, la poudre de cacao ou leurs mélanges, dans lequel la température à l'intérieur de l'enceinte au cours du broyage est inférieure à 20°C, et dans lequel la composition de base de chocolat déchargée est sous une forme granulaire ayant une dimension de particules inférieure à 200 micromètres.

32. Procédé suivant la revendication 30 ou 31, dans lequel la matière du type du chocolat consiste en brisures de fèves de cacao et la dimension de particules est inférieure à 50 micromètres.

33. Procédé pour la préparation d'une composition de base de chocolat blanc, dans lequel la composition de base de chocolat blanc est apte à la préparation de produits en chocolat blanc, ledit procédé comprenant les étapes consistant :
(1) à fournir un mélange comprenant un agent édulcorant et de la matière sèche de produit laitier, le mélange étant sec et fluide ;
(2) à broyer le mélange dans un appareil de broyage à tourbillonnement en utilisant un gaz comprimé de formation de tourbillons sans utiliser de pièces mécaniques mobiles, pour fournir la composition de base de chocolat blanc, ladite composition de base de chocolat blanc étant sous une forme granulaire ayant une dimension de particules inférieure à 300 micromètres, et ladite composition de base de chocolat blanc étant apte à la préparation de produits en chocolat blanc.

34. Procédé suivant la revendication 33, dans lequel la dimension de particules est inférieure à 50 micromètres.

35. Procédé suivant la revendication 33, comprenant en outre les étapes consistant :
(1) à introduire un gaz comprimé dans une enceinte qui renferme une section en forme de cône tronqué, où le gaz introduit suit un trajet descendant à travers l'enceinte, y compris la section conique, jusqu'à une extrémité inférieure de celle-ci, et le gaz atteignant l'extrémité inférieure remonte et quitte l'enceinte par un orifice d'échappement ;
(2) à introduire dans l'enceinte le mélange comprenant un agent édulcorant et de la matière sèche de produit laitier, sous forme d'ingrédients secs fluides, mélange qui est entraîné dans le gaz introduit descendant à travers l'enceinte, où au moins une portion du mélange est broyée avant d'atteindre l'extrémité inférieure de l'enceinte pour former une composition de base de chocolat blanc granulaire ;
(3) à décharger la composition de base de chocolat blanc granulaire par l'extrémité inférieure de l'enceinte ;
dans lequel la composition de base de chocolat blanc déchargée est sous une forme granulaire ayant une dimension de particules inférieure à 300 micromètres, et dans lequel la composition de base de chocolat blanc déchargée est apte à la préparation de produits en chocolat blanc.

36. Procédé suivant la revendication 35, dans lequel la dimension de particules est inférieure à 50 micromètres.
